Europäisches Patentamt

European Patent Office

Office européen des brevets

(19)

(11) **EP 0 787 389 B1**

(12) # EUROPÄISCHE PATENTSCHRIFT

(45) Veröffentlichungstag und Bekanntmachung des Hinweises auf die Patenterteilung:
**02.09.1998 Patentblatt 1998/36**

(51) Int Cl.[6]: **H04J 3/06**, H04L 7/04, H04L 7/033, H04B 10/207

(21) Anmeldenummer: **95935953.0**

(22) Anmeldetag: **20.10.1995**

(86) Internationale Anmeldenummer:
**PCT/EP95/04118**

(87) Internationale Veröffentlichungsnummer:
**WO 96/13915 (09.05.1996 Gazette 1996/21)**

(54) **ABSTIMMUNGSVERFAHREN FÜR PUNKT-ZU-MULTIPUNKT KOMMUNIKATIONSSYSTEME**

RANGING PROCESS FOR POINT-TO-MULTIPOINT COMMUNICATION SYSTEMS

PROCEDE DE SYNTONISATION POUR SYSTEMES DE TELECOMMUNICATIONS POINT-MULTIPOINT

(84) Benannte Vertragsstaaten:
**AT BE CH DK ES FR GB IE IT LI NL PT SE**

(30) Priorität: **27.10.1994 DE 4438344**

(43) Veröffentlichungstag der Anmeldung:
**06.08.1997 Patentblatt 1997/32**

(73) Patentinhaber: **NOKIA TELECOMMUNICATIONS OY**
**02150 Espoo (FI)**

(72) Erfinder:
- **MUSIOL, Torsten**
  **D-40468 Düsseldorf (DE)**
- **VELKER, Torsten**
  **D-40472 Düsseldorf (DE)**

- **LUNAU, Jens**
  **D-40211 Düsseldorf (DE)**

(74) Vertreter: **Schippan, Ralph, Dr.-Ing.**
**Cohausz & Florack**
**Patentanwälte**
**Postfach 33 02 29**
**40435 Düsseldorf (DE)**

(56) Entgegenhaltungen:
EP-A- 0 521 197 EP-A- 0 616 443
EP-A- 0 616 444 GB-A- 2 272 610

- **JOURNAL OF LIGHTWAVE TECHNOLOGY, USA, Bd. 12, Nr. 2, Februar 1994 ISSN 0733-8724, Seiten 271-279, XP 000469790 ELDERING C A ET AL 'Digital burst mode clock recovery technique for fiber-optic systems'**

**Beschreibung**

Die Erfindung betrifft ein Abstimmungsverfahren für Punkt-zu-Multipunkt Kommunikationssysteme bestehend aus einer Zentralstation (OLT) und mehreren über ein Netzwerk, insbesondere ein passives optisches Netzwerk, mit der Zentralstation (OLT) verbundenen Endstellen (ONU), wobei der Datentransfer von der Zentralstation zu den Endstellen (hinlaufender Datenstrom) bzw. von den Endstellen zur Zentralstation (rücklaufender Datenstrom) synchron mittels Zeitbereichsmultiplex (TDM) in identisch strukturierten Rahmen (frame) und bei einer durch einen an der Zentralstation zur Verfügung gestellten und an den Endstellen rückgewonnenen Datentakt (OLT-CLK-DAT bzw. ONU-CLK-DAT) vorgegebener Bitrate erfolgt, wobei jeder Endstelle ein Zeitabschnitt innerhalb des Datenstromes für deren Informationsdaten zugeordnet ist und benachbarte Zeitbereiche unterschiedlicher Endstellen unmittelbar aneinander angrenzen, wobei jede Endstelle auf einem außerhalb des Datenübertragungsbandes liegenden Träger eine Abstimmsequenz (ONU-PNS-TX) mit einer durch einen aus dem Datentakt (ONU-CLK-DAT) durch Teilung in einem festgelegten Verhältnis gewonnenen Sequenztakt (ONU-CLK-SEQ) vorgegebenen kleineren Bitrate phasensynchron zum empfangenen Rahmen aussendet, diese von der Zentralstation (OLT) verzögert empfangen wird (ONU-PNS-RX) und mit einer lokal in der Zentralstation (OLT) phasensynchron zum gesendeten Rahmen identisch erzeugten Abstimmsequenz (OLT-PNS) korreliert wird, und wobei aus dem Extremwert der Korrelationsfunktion die Hin-/ Rücklaufverzögerungszeit der jeweiligen Endstelle (ONU) bestimmt und daraus die in der Endstelle erforderliche Totzeit zwischen dem empfangenen und dem von ihr gesendeten Datenpaket (Burst) abgeleitet wird.

Punkt-zu-Multipunkt Kommunikationssysteme, bei denen der Datentransfer über TDM/TDMA (time division multiplex/ time division multiplex access) -Technik erfolgt, weisen üblicherweise eine baumartige Netzwerkstruktur auf, wobei die Zentralstation OLT die Wurzel bildet und mehrere Endstellen (ONU) die Blätter. Die Datenübertragung zwischen der Zentralstation einerseits und den Endstellen andererseits erfolgt in beiden Richtungen entsprechend dem im Zeitbereichsmultiplexverfahren (TDM) üblichen Schema. Dabei stehen für die Datenübertragung innerhalb eines Bit-Rahmens (bit frame) neben Identifikations- und Management-Bits, die für alle Endstellen gedacht sind, für die Information jeder einzelnen Endstelle jeweils ein bestimmter Zeitbereich zur Verfügung.

Innerhalb dieses Zeitbereichs befinden sich nur die für die jeweilige Endstelle gedachte bzw. die von der jeweiligen Endstelle ausgesandte Information in Form sogenannter Datenpakete (Bursts). Um die Übertragungskapazität des Netzwerkes optimal auszunutzen, ist es erwünscht, daß die Daten-Bursts der einzelnen Endstellen lückenlos aneinander gereiht angeordnet sind.

Dies ist beim hinlaufenden Datenstrom weniger ein Problem, da die Zentralstation die Daten entsprechend sequentiell sortiert aussenden kann.

Um sicherstellen zu können, daß auch im rücklaufenden Datenstrom die Reihenfolge der von den einzelnen Endstellen ausgesandten Bursts derjenigen der ursprünglich ausgesandten Reihenfolge entspricht, müssen laufzeitbedingte Unterschiede ausgeglichen werden, die von unterschiedlichen Abständen der Endstellen zur Zentralstation und internen Verzögerungen bei der Aufbereitung und Weitergabe der Daten innerhalb jeder Endstelle herrühren. Da die einzelnen Endstellen die Laufzeitverzögerungen der übrigen Endstellen nicht erfassen können, ist eine zentrale Organisation der Datensynchronisation durch die Zentralstation erforderlich.

Zum Ausgleich dieser Laufzeitunterschiede der einzelnen Endstellen ist es erforderlich, jeder Endstelle eine zusätzliche Verzögerung (Totzeit) zuzuordnen, so daß im Ergebnis sämtliche Endstellen, die durch die Endstelle mit der längsten Laufzeit definierte größte Hin-/ Rücklaufverzögerungszeit simulieren. Die Hin-/ Rücklaufverzögerung wird durch einen Abstimmungsvorgang erfaßt, der als separater Schritt vor dem regulären Betreiben des Datenkommunikationssystemes durchgeführt wird.

Darüber hinaus kann ein kontinuierlicher Ausgleich von Verzögerungen, die beispielsweise durch Temperaturschwankungen des Netzes bedingt sind, während des regulären Betriebes des Kommunikationssystemes durchgeführt werden (sog. phase tracking). Im Rahmen der vorliegenden Erfindung geht es jedoch ausschließlich um die Abstimmung des Kommunikationsnetzes vor dem regulären Betrieb.

Abstimmungsverfahren für Punkt-zu-Multipunkt Kommunikationssysteme sind beispielsweise aus der TDMA-Satellitenübertragungstechnik bekannt.

Gemäß einem ersten bekannten Verfahren (Fenstertechnik/ idle period technique) wandert ein Impuls über das Netzwerk von der Zentralstation zur jeweiligen Endstelle und zurück, wobei der Datenverkehr während dieser der Hin-/ Rücklaufverzögerungszeit entsprechenden Dauer unterbrochen ist. Dies bedeutet, daß die Datenpakete während einer vergleichsweise langen Zeitdauer in den Endstellen zwischengespeichert werden müssen. Dies hat zwar wenig Einfluß auf die Übertragungskapazität, da diese Abstimmung nur selten durchgeführt werden muß, jedoch eine merkliche Auswirkung auf die Datenübertragungssicherheit, da eine Unterbrechung des Datentransfers nicht immer zuverlässig dann erfolgen kann, wenn sich gerade die Datenpakete in den Endstellen befinden. Somit werden auf der Leitung befindliche Datenpakete gestört.

Gemäß einer zweiten bekannten Variante, der "Low level technique" werden Abstimmungssignale und Datenübertragungssignale gleichzeitig über das Netzwerk übertragen. Die Amplitude der Abstimmungssignale muß dabei so bemessen sein, daß der normale Datentransfer möglichst wenig gestört wird. Hierzu wird das Abstimmungssignal auf einen Träger moduliert, dessen Frequenz außerhalb des Übertragungsbandes angeordnet ist (out-of-band). Alternativ wird eine als "Spread spectrum technique" bezeichnete Methode angewendet, bei der die Hin-/ Rücklaufverzögerungszeit durch die Messung der Phasendifferenz zwischen zwei Pseudorauschsequenzen (Pseudo-Noise-Sequence, PNS) ermittelt wird. Die letztere Methode entspricht dem Verfahren der eingangs genannten Art und ist beschrieben in dem Aufsatz "Ranging in TDMA PON systems", Verfasser Lucio D'Ascoli, RACE Open Workshop on Broadband Access Nijmegen, the Netherlands, June 7-8, 1993.

Gemäß dem Verfahren der eingangs genannten Art wird einerseits in der Zentralstation eine Abstimmsequenz in Form einer sogenannten Pseudorauschsequenz erzeugt. Andererseits wird beim Empfang eines entsprechenden Kommandos, welches von der Zentralstation ausgesendet wurde, in der zugehörigen Endstelle eine entsprechende Pseudorauschsequenz erzeugt, deren Phasenlage genau definiert ist. In einem am Eingang der Zentralstation angeordneten Korrelator wird die Phasenlage der beiden Pseudorauschsequenzen relativ zueinander bestimmt. Die Korrelation $CORR$ zweier binärer, periodisch abgetasteter Signale $I_1$ und $I_2$ sei dabei nach $N$ Abtastungen mit der Periode $T$ durch

$$CORR(N) = \sum_{i=0}^{N-1} \overline{I_1(t_0 \div iT) \ominus I_1(t_0 \div iT)}$$

definiert. Dementsprechend wird die in der Zentralstation empfangene Pseudorauschsequenz mit der lokal erzeugten identischen Pseudorauschsequenz verglichen. Durch zeitliche Verschiebung der lokal erzeugten Pseudorauschsequenz in Bezug auf die empfangene kann die Korrelationsfunktion (Kreuzkorrelation) als Menge der Korrelationswerte in Abhängigkeit von der zeitlichen Verschiebung beider Sequenzen bestimmt werden, wobei das Funktionsmaximum die zur Endstelle gehörige Hin-/ Rücklaufverzögerungszeit bestimmt. Da die Phasenlage der empfangenen Bits der Pseudorauschsequenzen unbekannt ist, wird der Korrelationsprozeß üblicherweise in Schrittweiten vorgenommen, die der halben Bitperiode der Pseudorauschsequenzen entspricht.

Da die Bitrate des Datenkommunikationssystems jedoch sehr viel höher als die Frequenz der Pseudorauschsequenzen ist, andererseits aber eine Genauigkeit der Abstimmung in der Größenordnung eines Datenbits erforderlich ist, ist das bekannte Abstimmungsverfahren (siehe z.B. EP-A-0 521 197) zweistufig ausgebildet, nämlich unterteilt in eine Grobabstimmung (coarse ranging) und eine Feinabstimmung (fine ranging). Die Grobabstimmung erfolgt durch die oben beschriebene Korrelation der beiden Pseudorauschsequenzen in der Zentralstation. Die sich anschließende Feinabstimmung erfolgt prinzipiell nach dem oben beschriebenen Fenstertechnik-Verfahren (idle period technique), indem die Endstelle innerhalb des durch die Grobabstimmung definierten Fensters auf Kommando der Zentralstation einen Impuls aussendet, der von der Zentralstation durch einen Zähler o.ä. bitgenau lokalisiert wird. Im Anschluß an die Feinabstimmung kann die bitgenau gemessene Verzögerungszeit auf die jeweilige Endstelle übertragen werden. Erfolgt das beschriebene Verfahren für jede der Endstellen, kann die für die jeweilige Endstelle maßgebliche interne Verzögerung bestimmt werden. Dies führt im Ergebnis dazu, daß auch der rücklaufende Datenstrom in derselben Ordnung wie der hinlaufende Datenstrom organisiert ist, so daß der synchrone Datentransfer zwischen Zentralstation und den Endstellen gewährleistet ist.

Das beschriebene Verfahren weist den Nachteil auf, daß ein beträchtlicher Hardware-Aufwand sowohl in der Zentralstation als auch den Endstellen vorhanden sein muß, um die genaue Abstimmung durchzuführen. Insbesondere muß in jeder der Endstellen eine entsprechende Hardware vorgesehen sein, die einerseits ein phasenrichtiges Aussenden der Pseudorauschsequenz ermöglicht und andererseits den Umschaltbefehl der Zentralstation beim Übergang von der Grobabstimmung auf die Feinabstimmung empfangen und umsetzen kann. Dies ist insbesondere dann von Nachteil, wenn ein Kommunikationsnetz mit einer Vielzahl von Endstellen vorliegt.

Daher liegt der Erfindung die Aufgabe zugrunde, ein Verfahren der eingangs genannten Art dahingehend weiterzuentwickeln, daß die für die Abstimmung erforderliche Hardware in den einzelnen Endstellen weniger aufwendig gestaltet sein kann.

Diese Aufgabe wird erfindungsgemäß dadurch gelöst, daß die Abstimmsequenz eine binäre Sequenz ist, deren Autokorrelationsfunktion einen Extremwert im Nullpunkt hat, daß zunächst in der Zentralstation (OLT) die relative Phasenlage der empfangenen Bits der Abstimmsequenz (ONU-PNS-RX) in Bezug auf einen aus dem Datentakt (OLT-CLK-DAT) durch Teilung in einem festgelegten Verhältnis gewonnenen Referenz-Sequenztakt (OLT-CLK-SEQ) mit der Genauigkeit von einer Bitperiode des Datentaktsignals (OLT-CLK-DAT) bestimmt wird und daß danach die Abstimmsequenzen der Endstelle und der Zentralstation (OLT-PNS) unter Berücksichtigung der nun bekannten Bit-Phasenlage (ONU-PNS-SEL) miteinander korreliert werden.

Die Erfindung zeichnet sich dadurch aus, daß im Gegensatz zum Stand der Technik, bei dem die Abstimmung - von der Endstelle aus betrachtet - in zwei Stufen (Grobabstimmung/ Feinabstimmung) durchgeführt wurde, nunmehr eine Abstimmung in einem Schritt erfolgt, so daß ein entsprechender Umschaltbefehl für die einzelnen Endstellen nicht mehr erforderlich ist.

Die Phasenlage der von der Endstelle gesendeten und an der Zentralstation empfangenen Bits der Abstimmsequenz, deren Rate geringer ist als die durch den Datentakt (OLT-CLK-DAT) bestimmte Datenbitrate des Kommunikationssystems, wird dadurch ermittelt, daß während der Dauer eines Bits der empfangenen Abstimmsequenz (Sequenzbit) eine Mehrzahl von Abtastungen mit dem Datentakt (OLT-CLK-DAT) durchgeführt wird. Die Anzahl der Abtastungen M ist durch das Verhältnis der Datenbitrate des Kommunikationssystems zur Bitrate der Abstimmsequenz bestimmt. Diese Abtastung bildet somit M Phasen eines empfangenen Sequenzbits im zeitlichen Abstand von jeweils einem Datenbit in Bezug auf den aus dem Datentakt (OLT-CLK-DAT) abgeleiteten lokalen Sequenztakt (OLT-CLK-SEQ) ab. Jeweils benachbarte Phasen werden durch M-1 mit dem lokalen Sequenztakt (OLT-CLK-SEQ) betriebene Korrelatoren innerhalb einer durch eine festgelegte Anzahl von Sequenzbits bestimmten Zeit verglichen. Die in den Korrelatoren ausgeführte Summation reduziert den Einfluß von Störgrößen auf dem Übertragungsweg, die sich letztlich in einer zeitlich veränderlichen Phasenlage (Jitter) widerspiegeln.

Die Korrelation ist somit eine statistisch zu betrachtende Maßzahl für das Auftreten von Signalwechseln (Flanke 0->1 oder 1->0) innerhalb einer betrachteten Phase.

In einem letzten Schritt wird derjenige Korrelator ermittelt, dessen Ergebnis als Extremwert das Paar benachbarter Phasen der Sequenzbits bezeichnet, dessen Korrelation am geringsten ist. Dieses Paar benachbarter Phasen kennzeichnet die relative Phasenlage der Bits der empfangenen Abstimmsequenz (ONU-PNS-RX) in Bezug auf den Referenz-Sequenztakt (OLT-CLK-SEQ) mit einer dem Datentakt (OLT-CLK-DAT) entsprechenden Genauigkeit.

Nachdem die Bit-Phasenlage feststeht, kann die empfangene Sequenz somit durch den Referenz-Sequenztakt (OLT-CLK-SEQ) optimal abgetastet werden, d.h. zeitlich betrachtet in der Mitte der Sequenzbits (re-timing) .

Entsprechend der beim Stand der Technik beschriebenen Grobabstimmung erfolgt nun die Bestimmung der Korrelationsfunktion zwischen der abgetasten empfangenen Abstimmsequenz und der intern erzeugten Abstimmsequenz. Somit läßt sich bitgenau die Hin-/ Rücklaufverzögerungszeit (round trip delay) ermitteln und auf die einzelnen Endstellen übertragen.

Die Erfindung zeichnet sich insbesondere dadurch aus, daß keine Kommunikation mit der Endstelle erforderlich ist, um - wie beim Stand der Technik - die Feinabstimmung zu starten.

Darüber hinaus wird der Hardware-Aufwand auch in der Zentralstation reduziert, da für die Phasenkorrelation und die Sequenzkorrelation identisch aufgebaute Schaltkreise verwendet werden können.

Weitere bevorzugte Ausführungsformen gehen aus den Unteransprüchen hervor.

Durch zusätzliche Verarbeitungsschritte, wie z.B. Bildung eines gleitenden Mittelwertes für jeden Korrelator während einer genügend großen Anzahl von Sequenzen, läßt sich die Empfindlichkeit des Verfahrens gegenüber Störeinflüssen weiter reduzieren.

Die Erfindung wird im folgenden anhand einer ein Ausführungsbeispiel darstellenden Zeichnung näher erläutert. Dabei zeigen:

Fig. 1    einen Schaltkreis zur Durchführung des Abstimmungsverfahrens gemäß einem Ausführungsbeispiel der Erfindung und

Fig. 2a,2b    Pegel-Diagramme zur Erläuterung der Funktionsweise nach Fig. 1.

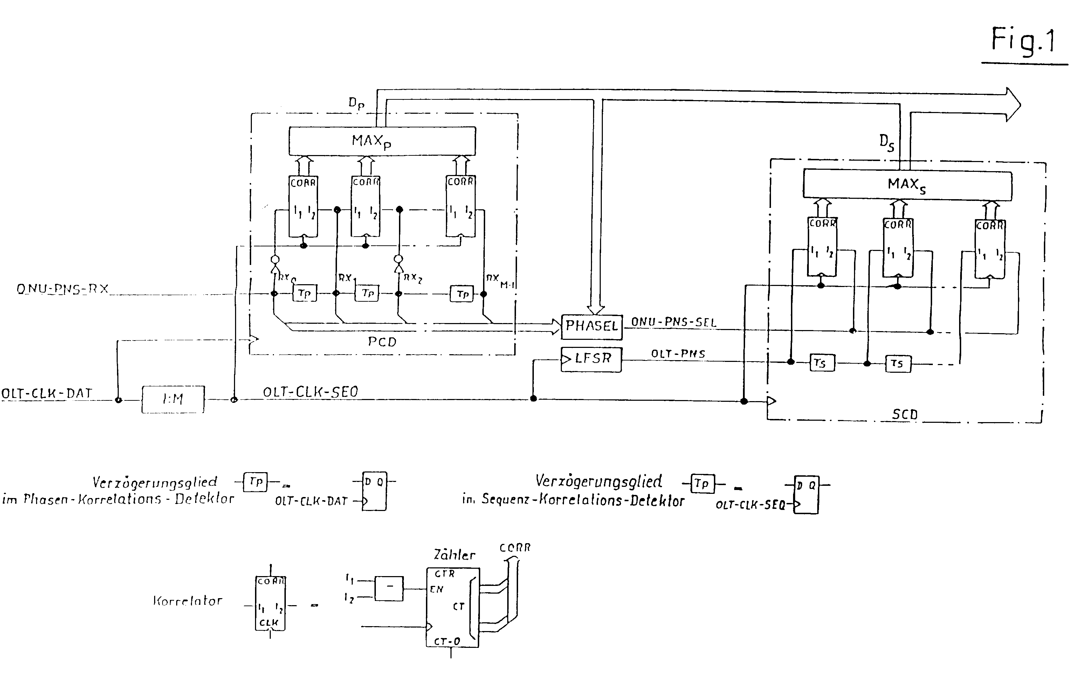

Die in Fig. 1 dargestellte Schaltung ist innerhalb der Zentralstation eines Datenkommunikationssystemes angeordnet. Die Zentralstation ist dabei über ein baumförmiges Netzwerk in Form eines passiven optischen Netzwerkes mit einzelnen Endstellen verbunden, wobei die Zentralstation die Wurzel des baumförmigen Netzwerkes und die Endstellen dessen Blätter bilden.

Der gemäß TDM-Technik organisierte Datenstrom verläuft als hinlaufender Datenstrom von der Zentralstation zu den einzelnen Endstellen und als rücklaufender Datenstrom von den Endstellen zur Zentralstation. Da die Endstellen jeweils unterschiedliche Abstände zur Zentralstation aufweisen, tritt eine für jede Endstelle unterschiedliche Hin-/ Rücklaufverzögerung der Datensignale ein. Diese zu ermitteln ist Aufgabe der Abstimmungsschaltung gemäß Fig. 1.

Um die Hin-/ Rücklaufverzögerungszeit jeder einzelnen Endstelle zu bestimmen, sendet die Endstelle auf entsprechenden Befehl der Zentralstation eine Abstimmsequenz in Form einer Pseudorauschsequenz ONU-PNS-TX aus. Hierbei handelt es sich um eine Sequenz, die durch Takten eines Schieberegisters mit einer vorgegebenen Taktfrequenz erfolgt, wobei das Schieberegister als sog. LFSR (Linear Feedback Shift Register) so gestaltet ist, daß es eine, sich periodisch wiederholende, pseudo-zufällige Bitfolge erzeugt. Wenn die Anzahl der Flip-Flops des Schieberegisters n beträgt, ist die Länge der im Schieberegister erzeugten Sequenz $N=2^n$-1 Bit. Die besondere Eigenschaft einer solchen Pseudorauschsequenz ist, daß ihre Autokorrelationsfunktion einen Extremwert bei Null hat.

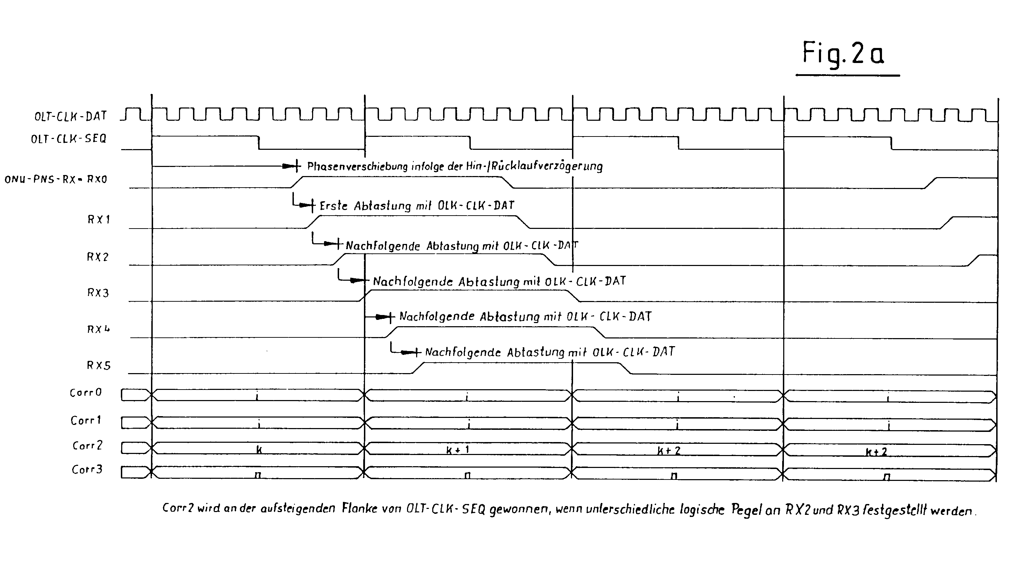

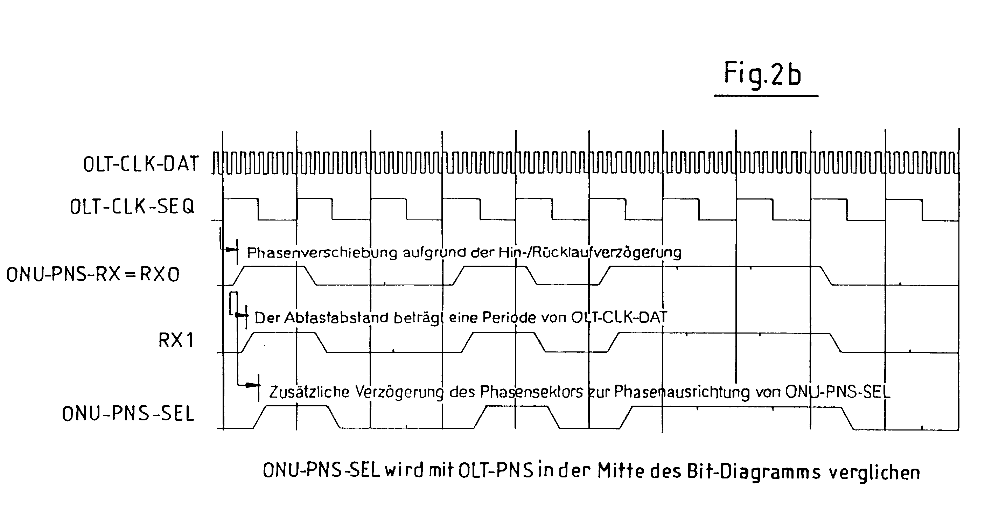

Das gegenüber dem Signal ONU-PNS-TX verzögert empfangene Signal ONU-PNS-RX (Fig. 2a) wird dem als Phasen-Korrelations-Detektor PCD bezeichneten linken Teil von Fig. 1 zugeführt. Dieser ist aus einer Kette von M-1 Verzögerungsgliedern, M-1 Korrelatoren und einem Maximum-Detektor $MAX_p$ aufgebaut. Der Phasen-Korrelations-Detektor ermittelt die Phasenverschiebung des Signals ONU-PNS-RX in Bezug auf das lokal aus dem Datentakt OLT-CLK-DAT durch Teilung mit dem Faktor M erzeugte Sequenztaktsignal OLT-CLK-SEQ (siehe Fig. 2b) mit der Genauigkeit von einer Bitperiode des Taktsignals OLT-CLK-DAT. Dies wird durch die Messung der Korrelation benachbarter Bit-Phasen $RX_i$ (i = 0...M-1), die aus einer Kette von M-1 Verzögerungsgliedern abgeleitet werden, erreicht.

Die Verzögerung $\tau_p$ entspricht dabei einer Periode des Taktsignals OLT-CLK-DAT. Eine schaltungstechnische Realisierung einer solchen Verzögerungskette kann durch ein mit OLT-CLK-DAT getaktetes Schieberegister erfolgen.

Die weitere Verarbeitung benachbarter Bit-Phasen $RX_i$ in den Korrelatoren CORR erfolgt mit dem Sequenztakt OLT-CLK-SEQ. Bei Invertierung jeweils einer der beiden Phasen wird die zeitliche Verschiebung der Signalwechsel (Flanken) des Signals ONU-PNS-RX, bezogen auf OLT-CLK-SEQ und ausgedrückt in einer Anzahl $D_p$ von Perioden des Datentakts OLT-CLK-DAT, durch den Maximalwert der Korrelationen gekennzeichnet.

Anschließend wird diejenige der Bit-Phasen $RX_i$ mit Hilfe eines Phasenselektors PHASEL ausgewählt (ONU-PNS-SEL, siehe Fig. 2b), die eine optimale Abtastung durch OLT-CLK-SEQ, d.h. zeitlich betrachtet in der Mitte der Sequenzbits, ermöglicht. Das Signal ONU-PNS-SEL wird dem im rechten Teil von Fig. 1 dargestellten Sequenz-Korrelations-Detektor zugeführt.

Gleichzeitig wird intern in der Zentralstation eine entsprechende Pseudorauschsequenz OLT-PNS der Länge (Periode) N generiert. Dabei kommt ein mit OLT-CLK-SEQ getaktetes Schieberegister LFSR zur Anwendung, das in seinem Aufbau zu denen in den Endstellen verwendeten identisch ist.

Der Sequenz-Korrelations-Detektor SCD besteht, analog zum oben beschriebenen Phasen-Korrelations-Detektor PCD, aus einer Kette von Verzögerungsgliedern, einer Anzahl von Korrelatoren CORR und einem Maximum-Detektor $MAX_s$. Die Verzögerung $\tau_s$ entspricht jedoch hierbei einer Periode des Sequenztakts OLT-CLK-SEQ. Eine schaltungstechnische Realisierung einer solchen Verzögerungskette kann wiederum durch ein Schieberegister, mit OLT-CLK-SEQ getaktet, erfolgen.

Die Ermittlung der vollständigen Korrelationsfunktion $CORR_i$ kann entweder seriell (bei Verwendung nur eines Korrelators) oder mindestens teilweise parallel ablaufen, wobei der Index i ($i=0...2^n-2$, n = Anzahl der Flip-Flops des LFSR) die Verzögerung in Takten von OLT-CLK-SEQ angibt. Der Maximalwert von $CORR_i$ kennzeichnet die zeitliche Verschiebung von ONU-PNS-SEL, bezogen auf OLT-PNS und ausgedrückt in einer Anzahl $D_s$ von Perioden des Sequenztakts OLT-CLK-SEQ.

Aus den Ergebnissen beider Korrelations-Detektoren kann die Hin-/ Rücklaufverzögerungszeit der entsprechenden Endstelle ONU bitgenau mit $D = M*D_s + D_p$ bestimmt werden.

Die im rechten und im linken Teil von Fig. 1 gezeigten Schaltungen sind prinzipiell identisch aufgebaut und könnten gegebenenfalls durch nur einen Korrelations-Detektor realisiert werden.

Der in den einzelnen Endstellen erforderliche Hardware-Aufwand beschränkt sich darauf, dort einen Generator für die Pseudorauschsequenz vorzusehen und eine Empfangsschaltung für die Ausführung des Abstimmungsbefehls von der Zentralstation einzurichten.

**Patentansprüche**

1. Abstimmungsverfahren für Punkt-zu-Multipunkt Kommunikationssysteme bestehend aus einer Zentralstation (OLT) und mehreren über ein Netzwerk, insbesondere ein passives optisches Netzwerk, mit der Zentralstation (OLT) verbundenen Endstellen (ONU), wobei der Datentransfer von der Zentralstation zu den Endstellen (hinlaufender Datenstrom) bzw. von den Endstellen zur Zentralstation (rücklaufender Datenstrom) synchron mittels Zeitbereichsmultiplex (TDM) in identisch strukturierten Rahmen und bei einer durch einen an der Zentralstation zur Verfügung gestellten und an den Endstellen rückgewonnenen Datentakt (OLT-CLK-DAT bzw. ONU-CLK-DAT) vorgegebenen Bitrate erfolgt, wobei jeder Endstelle ein Zeitabschnitt innerhalb des Datenstromes für deren Informationsdaten zugeordnet ist und benachbarte Zeitabschnitte unterschiedlicher Endstellen unmittelbar aneinander angrenzen, wobei jede Endstelle auf einem außerhalb des Datenübertragungsbandes liegenden Träger eine Abstimmsequenz (ONU-PNS-TX) mit einer durch einen aus dem Datentakt (ONU-CLK-DAT) durch Teilung in einem festgelegten Verhältnis gewonnenen Sequenztakt (ONU-CLK-SEQ) vorgegebenen kleineren Bitrate phasensynchron zum empfangenen Rahmen aussendet, diese von der Zentralstation (OLT) verzögert empfangen wird (ONU-PNS-RX) und mit einer lokal in der Zentralstation (OLT) phasensynchron zum gesendeten Rahmen identisch erzeugten Abstimmsequenz (OLT-PNS) korreliert wird, und wobei aus dem Extremwert der Korrelationsfunktion die Hin-/ Rücklaufverzögerungszeit der jeweiligen Endstelle (ONU) bestimmt und daraus die in der Endstelle erforderliche Totzeit zwischen dem empfangenen und dem von ihr gesendeten Datenpaket (Burst) abgeleitet wird, **dadurch gekennzeichnet, daß** die Abstimmsequenz eine binäre Sequenz ist, deren Autokorrelationsfunktion einen Extremwert im Nullpunkt hat, daß zunächst in der Zentralstation (OLT) die relative Phasenlage der empfangenen Bits der Abstimmsequenz (ONU-PNS-RX) in Bezug auf einen aus dem Datentakt (OLT-CLK-DAT) durch Teilung in einem festgelegten Verhältnis gewonnenen Referenz-Sequenztakt (OLT-CLK-SEQ) mit der Genauigkeit von einer Bitperiode des Datentaktsignals (OLT-CLK-DAT) mittels eines Phasen-Korrelations-Detektors bestimmt wird und daß danach die Abstimmsequenzen der Endstelle bzw. der Zentralstation unter Berücksichtigung der nun bekannten Bit-Phasenlage mittels eines Sequenz-Korrelations-Detektors phasenrichtig miteinander korreliert werden.

2. Verfahren nach Anspruch 1,
**dadurch gekennzeichnet, daß** der Phasen-Korrelations-Detektor die Phasenverschiebung der empfangenen Sequenzbits in Bezug auf das Sequenztaktsignal (OLT-CLK-SEQ) durch die Messung der Korrelation benachbarter Bit-Phasen, die aus einer Kette von Verzögerungsgliedern abgeleitet werden, ermittelt.

3. Verfahren nach einem der vorhergehenden Ansprüche,
**dadurch gekennzeichnet, daß** die Erzeugung der Abstimmsequenz in der Zentralstation und der betrachteten Endstelle identisch in Form einer Pseudorauschsequenz in einem Schieberegister, insbesondere einem LFSR (Linear Feedback Shift Register) erfolgt, welches mit dem Sequenztakt (OLT-CLK-SEQ bzw. ONU-CLK-SEQ) getaktet ist.

4. Verfahren nach einem der vorhergehenden Ansprüche,
**dadurch gekennzeichnet, daß** mit Hilfe eines Phasenselektors unter Berücksichtigung der vom Phasen-Korrelations-Detektor ermittelten Bit-Phasenlage ein phasenverschobenes Sequenzsignal (ONU-PNS-SEL) so ausgewählt wird, daß eine optimale Abtastung durch den Sequenztakt (CKSEQ), d.h. zeitlich betrachtet in der Mitte der Sequenzbits, erfolgt.

5. Verfahren nach einem der vorhergehenden Ansprüche,
**dadurch gekennzeichnet, daß** für jeden Korrelator während einer genügend großen Anzahl von Sequenzen ein gleitender Mittelwert gebildet wird.

6. Verfahren nach einem der vorhergehenden Ansprüche,
**dadurch gekennzeichnet, daß** der zur Bestimmung der relativen Bit-Phasenlage der Abstimmsequenz (ONU-PNS-RX) in Bezug auf das Referenz-Sequenztaktsignal (OLT-CLK-SEQ) verwendete Phasen-Korrelations-Detektor und der zur Bestimmung der Korrelation der genannten Abstimmsequenzen ONU-PNS-SEL und OLT-PNS verwendete Sequenz-Korrelations-Detektor prinzipiell identisch aufgebaut sind.

7. Verfahren nach Anspruch 6,
**dadurch gekennzeichnet, daß** Phasen-Korrelations-Detektor und Sequenz-Korrelations-Detektor durch einen einzigen Korrelations-Detektor realisiert sind.

8. Verfahren nach einem der vorhergehenden Ansprüche,
**dadurch gekennzeichnet, daß** dadurch gekennzeichnet, daß die Korrelation der Abstimmsequenzen (ONU-PNS-SEL,OLT-PNS) in der Zentralstation sequentiell erfolgt.

9. Verfahren nach einem der vorhergehenden Ansprüche,
**dadurch gekennzeichnet, daß** die Korrelation der Abstimmsequenzen (ONU-PNS-SEL, OLT-PNS) in der Zentralstation mindestens teilweise parallel erfolgt.

**Claims**

1. A ranging method for point-to-multipoint communication systems comprising a central station (OLT) and several terminals (ONU) linked to the central station (OLT) via a network, in particular a passive optical network, whereby data transfer from the central station to the terminals (outgoing data stream) or from the terminals to the central station (returning data stream) respectively, takes place synchronously by means of time division multiplex (TDM) in identically-structured frames and by a data frequency rate (OLT-CLK-DAT or ONU-CLK-DAT) of a predefined bit rate provided at the central station and recovered at the terminals, each terminal being allocated a time period within the data stream for its information data, and adjacent time divisions of different terminals directly adjoining each other, whereby each terminal, on a carrier that is outside the data transmission band, transmits a ranging sequence (ONU-PNS-TX) - with a sequential frequency rate (ONU-CLK-SEQ) derived from the data frequency rate (ONU-CLK-DAT) by division in a fixed relationship - with a lower predefined bit rate, phase synchronous to the frame received, said ranging sequence being received with some delay (ONU-PNS-RX) by the central station (OLT) and being correlated with a ranging sequence (OLT-PNS) identically generated locally in the central station (OLT), phase synchronised to the frame transmitted, and whereby from the extreme value of the respective terminal (ONU) is determined and from it the lag time, required in the terminal, between the burst received and transmitted by it, is derived,

**characterised in that** the ranging sequence is a binary sequence whose auto-correlation function has one extreme value in the zero point, that in the first instance, in the central station (OLT), the relative phase position of the received bits of the ranging sequence (ONU-PNS-RX), in respect to a reference-sequential frequency rate (OLT-CLK-SEQ) derived from division in a predefined ratio is determined, taking into account the now-known bit phase position, by a phase-correlation detector with an accuracy of one bit period of the data frequency rate signal (OLT-CLK-DAT) and that subsequently the ranging sequences of the terminal or the central station are correlated in-phase in respect of each other by means of a sequence-correlation detector.

2. A method according to claim 1,
**characterised in that** the phase-correlation detector determines the phase shift of the received sequence bits in relation to the sequential frequency signal (OLT-CLK-SEQ) by measuring the correlation of adjacent bit phases which are derived from a line of delay elements.

3. A method according to one of the preceding claims,
**characterised in that** generation of the ranging sequence in the central station and in the observed terminal takes place identically in the form of a pseudo-noise sequence in a shift register, in particular in an LFSR (Linear Feedback Shift Register) which is clocked at the sequential frequency rate (OLT-CLK-SEQ or ONU-CLK-SEQ).

4. A method according to one of the preceding claims, **characterised in that** by means of a phase selector, taking into account the bit phase position determined by the phase-correlation detector, a phase-shifted sequence signal (ONU-PNS-SEL) is selected in such a way that optimal sampling by the sequential frequency rate (CKSEQ) takes place, i.e. from the point of view of time in the middle of the sequence bit.

5. A method according to one of the preceding claims,
**characterised in that** for each correlator a sliding average value is calculated over a sufficiently high number of sequences.

6. A method according to one of the preceding claims,
**characterised in that** the phase-correlation detector used to determine the relative bit phase position of the ranging sequence (ONU-PNS-RX) in respect of the reference sequential-frequency signal (OLT-CLK-SEQ) and the sequence-correlation detector used to determine the correlation of the said ranging sequences ONU-PNS-SEL and OLT-PNS, are basically identical in design.

7. A method according to claim 6,
**characterised in that** the phase-correlation detector and sequence-correlation detector are realised by a single correlation detector.

8. A method according to one of the preceding claims,
**characterised in that** the correlation of the ranging sequences (ONU-PNS-SEL, OLT-PNS) takes place sequentially in the central station.

9. A method according to one of the preceding claims,
**characterised in that** the correlation of the ranging sequences (ONU-PNS-SEL, OLT-PNS) takes place in the central station at least partially parallel.

**Revendications**

1. Procédé de syntonisation pour des systèmes de communication point - multipoint, constitué par un poste central (OLT) et plusieurs terminaux (ONU) reliés au poste central (OLT) par l'intermédiaire d'un réseau, notamment d'un réseau optique passif, selon lequel le transfert de données du poste central aux terminaux (flux de données aller) ou depuis les terminaux en direction du poste central (courant de données de retour) s'effectue d'une manière synchrone à l'aide d'un multiplexage de plages temporelles (TDM), dans des cadres structurés de façon identique et à une cadence binaire prédéterminée par une cadence de données (OLT-CLK-DAT ou ONU-CLK-DAT) délivrée au niveau du poste central et récupérée dans les terminaux, et selon lequel une tranche de temps est associée à chaque terminal à l'intérieur du flux de données pour ses données d'informations, et des tranches de temps voisines de terminaux différents sont directement contiguës, et selon lequel chaque terminal émet, sur une porteuse située à l'extérieur de la bande de transmission de données, une séquence de syntonisation (ONU-PNS-TX) possédant une cadence binaire inférieure, prédéterminée par une cadence de séquence (ONU-CLK-SEQ) obtenue à partir de la cadence de données (ONU-CLK-DAT) par division dans un rapport fixé, en phase avec la trame reçue, cette séquence est reçue (ONU-PNS-RX) par le poste central (OLT) d'une manière retardée et est corrélée à une séquence de syntonisation (OLT-PNS) produite localement d'une manière identique dans le poste central (OLT) en étant en phase avec la cadre émise, et selon lequel on détermine, à partir de la valeur extrême de la fonction de corrélation, le temps de retard aller/retour du terminal respectif (ONU) et à partir de là on obtient le temps mort, nécessaire dans le terminal, entre le paquet de données (salve) reçu et le paquet de données émis par ce terminal, caractérisé en ce que la séquence de syntonisation est une séquence binaire, dont la fonction d'auto-corrélation possède une valeur extrême au point zéro, que tout d'abord dans le poste central (OLT), la position de phase relative des bits reçus de la séquence d'accord (ONU-PNS-RX) est déterminée, par rapport à une cadence de séquence de référence (OLT-CLK-SEQ) déterminée à partir de la cadence de données (OLT-CLK-DAT) par division dans un rapport fixé, avec la précision d'une période binaire du signal de cadence de données (OLT-CLK-DAT) à l'aide d'un détecteur de corrélation de phase et qu'ensuite les séquences de syntonisation du terminal ou du poste central sont corrélées entre elles d'une manière correcte du point de vue de la phase, en tenant compte de la position de phase de bits connue, au moyen d'un détecteur de corrélation de séquence.

2. Procédé selon la revendication 1, caractérisé en ce que le détecteur de corrélation de phase détermine le déphasage des bits de séquence reçus par rapport au signal de cadence de séquence (OLT-CK-SEQ), au moyen de la mesure de la corrélation de phases de bits voisines, qui sont dérivées d'une chaîne de circuits de retardement.

3. Procédé selon l'une des revendications précédentes, caractérisé en ce que la détermination de la séquence de syntonisation dans le poste central et dans le terminal considéré s'effectue d'une manière identique sous la forme d'une séquence de pseudo-bruit dans un registre à décalage, notamment un registre LFSR (Linear Feedback Shift Register), qui est commandé de façon cadencée par la cadence de séquence (OLT-CLK-SEQ ou ONU-CLK-SEQ).

4. Procédé selon l'une des revendications précédentes, caractérisé en ce qu'à l'aide d'un sélecteur de phase et en tenant compte de la position de phase de bits déterminés par le détecteur de corrélation de phase, on sélectionne un signal de séquence déphasé (ONU-PNS-SEL), de telle sorte qu'on obtient une exploration optimale au moyen de la cadence de séquence (CKSEQ), c'est-à-dire d'une manière considérée dans le temps au centre des bits de séquence.

5. Procédé selon l'une des revendications précédentes, caractérisé en ce que pour chaque corrélateur, une valeur moyenne courante est formée pendant un nombre suffisamment grand de séquences.

6. Procédé selon l'une des revendications précédentes, caractérisé en ce que le détecteur de corrélation de phase, qui est utilisé pour la détermination de la position relative de phase des bits de la séquence de détermination (ONU-PNS-RX) par rapport au signal de cadence de séquence de référence (OLT-CLK-SEQ) et le détecteur de corrélation de séquences utilisé pour la détermination de la corrélation desdites séquences de syntonisation (ONU-PNS-SEL et OLT-PNS) ont un agencement en principe identique.

7. Procédé selon la revendication 6, caractérisé en ce que le détecteur de corrélation de phase et le détecteur de corrélation de séquence sont constitués par un seul détecteur de corrélation.

8. Procédé selon l'une des revendications précédentes, caractérisé en ce que la corrélation des séquences de syntonisation (ONU-PNS-SEL, OLT-PNS) s'effectue d'une manière séquentielle dans le poste central.

9. Procédé selon l'une des revendications précédentes, caractérisé en ce que la corrélation des séquences de syntonisation (ONU-PNS-SEL, OLT-PNS) s'effectue au moins partiellement en parallèle dans le poste central.

Fig.1

EP 0 787 389 B1

## Fig. 2a

OLT-CLK-DAT

OLT-CLK-SEQ

ONU-PNS-RX = RX0 — Phasenverschiebung infolge der Hin-/Rücklaufverzögerung

RX1 — Erste Abtastung mit OLK-CLK-DAT

RX2 — Nachfolgende Abtastung mit OLK-CLK-DAT

RX3 — Nachfolgende Abtastung mit OLK-CLK-DAT

RX4 — Nachfolgende Abtastung mit OLK-CLK-DAT

RX5 — Nachfolgende Abtastung mit OLK-CLK-DAT

Corr0: i · i · i ·

Corr1: i · i · i · i

Corr2: k · k+1 · k+2 · k+2

Corr3: n · n · n · n

Corr2 wird an der aufsteigenden Flanke von OLT-CLK-SEQ gewonnen, wenn unterschiedliche logische Pegel an RX2 und RX3 festgestellt werden.

EP 0 787 389 B1

Fig.2b

ONU-PNS-SEL wird mit OLT-PNS in der Mitte des Bit-Diagramms verglichen

EP 0 787 389 B1